Europäisches Patentamt

European Patent Office

Office européen des brevets

(19)

(11) **EP 1 198 379 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(21) Anmeldenummer: **00958165.3**

(22) Anmeldetag: **18.07.2000**

(51) Int Cl.⁷: $B61L\ 3/00$, $B60L\ 15/20$

(86) Internationale Anmeldenummer:
**PCT/DE00/02429**

(87) Internationale Veröffentlichungsnummer:
**WO 01/007309 (01.02.2001 Gazette 2001/05)**

(54) **ENERGIESPAR-EINRICHTUNG FÜR EIN SCHIENENFAHRZEUG**

ENERGY SAVING DEVICE FOR A RAIL VEHICLE

EQUIPEMENT ECONOMISEUR D'ENERGIE D'UN VEHICULE FERROVIAIRE

(84) Benannte Vertragsstaaten:
**AT BE CH CY DE DK ES FI FR GB GR IE IT LI LU MC NL PT SE**

(30) Priorität: **27.07.1999 DE 19935757**

(43) Veröffentlichungstag der Anmeldung:
**24.04.2002 Patentblatt 2002/17**

(73) Patentinhaber: **SIEMENS AKTIENGESELLSCHAFT**
**80333 München (DE)**

(72) Erfinder: **BAIER, Torsten**
**D-38315 Schladen (DE)**

(56) Entgegenhaltungen:
**DD-A- 262 836          DE-A- 3 026 652**
**US-A- 5 239 472**

EP 1 198 379 B1

**Beschreibung**

Die Erfindung bezieht sich auf eine Einrichtung für ein Schienenfahrzeug mit einer Recheneinheit, die unter Heranziehung eines gemessenen, den Ort des Schienenfahrzeugs angebenden Ortsmeßwertes und vorgegebener, abgespeicherter Wegstreckendaten einen den Abstand des Schienenfahrzeugs zum jeweils vorgesehenen nächsten Haltepunkt angebenden Abstandswert ermittelt, unter Heranziehung eines gemessenen, den jeweiligen Zeitpunkt angebenden Zeitmeßwertes und eines vorgegebenen, abgespeicherten Fahrplans die verbleibende Fahrzeit zum nächsten Haltepunkt ermittelt und unter Berücksichtigung des ermittelten Abstandswerts, der ermittelten verbleibenden Fahrzeit, eines die Geschwindigkeit des Schienenfahrzeugs angebenden Geschwindigkeitsmeßwertes und vorgegebener, das Ausrollverhalten des Schienenfahrzeugs bei abgeschaltetem Antrieb beschreibender Ausrolldaten einen Abschaltzeitpunkt errechnet, ab dem das Schienenfahrzeug unter Einhaltung des Fahrplans den jeweils fahrplanseitig vorgesehenen nächsten Haltepunkt antriebslos rechtzeitig erreicht, und einer mit der Recheneinheit verbundenen und von dieser angesteuerten Ausgabeeinrichtung, die ein den Abschaltzeitpunkt angebendes Abschaltsignal erzeugt.

Eine derartige Einrichtung ist aus der US-Patentschrift 5,239,472 bekannt und dient zum Einsparen von Fahrenergie bei Schienenfahrzeugen. Diese Einrichtung weist als Recheneinheit einen Mikroprozessor auf, der mit einem von einer Wegmeßeinrichtung erfaßten Ortsmeßwert und mit in einem Speicher (storage) abgespeicherten wegstreckendaten den Abstand des Schienenfahrzeugs zum jeweils nächsten Haltepunkt bestimmt. Der Mikroprozessor ermittelt darüber hinaus mit einem gemessenen Zeitmeßwert, der die jeweilige Uhrzeit angibt, sowie mit einem vorgegebenen, abgespeicherten Fahrplan die dem Schienenfahrzeug zum Erreichen des nächsten Haltepunkts verbleibende Fahrzeit. Mit dem Abstandswert sowie der verbleibenden Fahrzeit errechnet der Mikroprozessor anschließend unter Berücksichtigung der jeweiligen Fahrgeschwindigkeit und unter Berücksichtigung des Ausrollverhaltens des Schienenfahrzeugs denjenigen Zeitpunkt - nachfolgend Abschaltzeitpunkt genannt - , ab dem das Schienenfahrzeug den jeweils nächsten Haltepunkt antriebslos - also durch Ausrollen oder gebremst - unter Einhaltung des Fahrplans erreichen kann. Mit der Recheneinheit ist eine Ausgabeeinrichtung in Form einer Anzeigeeinrichtung verbunden. Die Anzeigeeinrichtung wird von der Recheneinheit derart angesteuert, daß sie durch Anzeige des Begriffs "coast" signalisiert, ab wann der Antrieb des Schienenfahrzeugs ausgeschaltet werden kann. Bei der vorbekannten Einrichtung werden die Wegstreckendaten und der vorgegebene Fahrplan vor Inbetriebnahme des Schienenfahrzeugs von einer streckenseitigen Recheneinheit zum Schienenfahrzeug übertragen und dort fest abgespeichert. Bei der vorbekannten Einrichtung handelt es sich zusammengefaßt also um eine Energiespar-Einrichtung, die anzeigt, ab wann der nächste Haltepunkt antriebslos und damit ohne Energieverbrauch unter Ausnutzung der jeweiligen kinetischen Energie des Schienenfahrzeugs fahrplangerecht erreicht werden kann.

Der Erfindung liegt die Aufgabe zugrunde, eine Einrichtung der eingangs beschriebenen Art derart fortzuentwickeln, daß mit dieser auch bei betrieblichen Störungen zuverlässig Fahrenergie eingespart werden kann.

Diese Aufgabe wird bei einer Einrichtung der eingangs beschriebenen Art erfindungsgemäß durch die in Anspruch 1 angegebenen Merkmale gelöst. Dies wird dadurch erreicht, daß die Einrichtung einen Dateneingang aufweist, an dem eine Fahrplan-Änderungsgröße in die Einrichtung eingebbar ist, und die Recheneinheit im Schienenfahrzeug derart ausgestaltet ist, daß sie - falls eine Fahrplan-Änderungsgröße eingegeben ist - mit dem vorgegebenen, abgespeicherten Fahrplan und der eingegebenen Fahrplan-Änderungsgröße einen modifizierten Fahrplan bildet und die verbleibende Fahrzeit sowie den Abschaltzeitpunkt unter Berücksichtigung des modifizierten Fahrplans anstelle des abgespeicherten Fahrplans bildet.

Dabei ist die Recheneinheit derart ausgestaltet, daß sie den modifizierten Fahrplan bildet, indem zu jeder einzelnen Zeitvorgabe des abgespeicherten Fahrplans die Fahrplanänderungsgröße addiert wird.

Ein wesentlicher Vorteil der erfindungsgemäßen Einrichtung besteht darin, daß diese auch dann zuverlässig den richtigen Zeitpunkt zum Abschalten des Antriebs angibt, wenn durch betriebliche Störungen - beispielsweise bei streckenseitigen Störungen wie "Staus" auf der Strecke oder bei Fahrzeugausfällen etc. - der Fahrplan nicht eingehalten werden kann. Die erfindungsgemäße Einrichtung weist nämlich im Unterschied zur vorbekannten Einrichtung einen Dateneingang auf, an dem eine Fahrplan-Änderungsgröße in die erfindungsgemäße Einrichtung eingebbar ist, so daß bei betrieblichen Störungen beispielsweise von einer Streckeneinrichtung Fahrplanänderungen z. B. per Funk in die Einrichtung eingegeben werden können. Zur Verarbeitung dieser Fahrplan-Änderungsgröße ist die Recheneinheit der erfindungsgemäßen Einrichtung derart ausgestaltet, daß sie mit dem vorgegebenen abgespeicherten Fahrplan und der eingegebenen Fahrplan-Änderungsgröße einen modifizierten Fahrplan bildet und die verbleibende Fahrzeit sowie den Abschaltzeitpunkt des Antriebs unter Berücksichtigung dieses modifizierten Fahrplans bildet. Zusammengefaßt ist es bei der erfindungsgemäßen Einrichtung also möglich, Fahrplanänderungen zu berücksichtigen, indem eine entsprechende Fahrplan-Änderungsgröße in die Einrichtung eingespeist wird, so daß mit der erfindungsgemäßen Einrichtung im Unterschied zu der vorbekannten Einrichtung auch bei betrieblichen Störungen zuverlässig Fahrenergie eingespart werden kann. Ein weiterer wesentlicher Vorteil der erfindungsgemäßen Einrichtung besteht darin, daß zur Eingabe der Fahrplanänderungen lediglich eine Fahrplan-Änderungsgröße in die Einrichtung eingegeben werden muß; es ist also nicht erforderlich, einen kompletten neuen Fahrplan zum Schienenfahrzeug bzw. zur erfindungsgemäßen Einrichtung zu übertragen. Dies soll an einem Beispiel nun erläutert werden: Ist auf einer Strecke eine Störung aufgetreten - beispielsweise durch einen Stau auf der Strecke - so läßt sich der ursprünglich abgespeicherte Fahrplan u. U. nicht mehr einhalten und muß durch einen neuen Fahrplan ersetzt werden. Da ein Fahrplan eine Vielzahl von Daten und somit eine große Datenmenge umfaßt, müßte im allgemeinen diese große Datenmenge zum Schienenfahrzeug übertragen werden, damit die Einrichtung bzw. die Recheneinheit den Abschaltzeitpunkt des Antriebs unter Berücksichtigung dieses neuen Fahrplans bestimmen kann. Bei der erfindungsgemäßen Einrichtung ist das Übertragen eines kompletten neuen Fahrplan-Datensatzes jedoch nicht erforderlich, da bei der erfindungsgemäßen Einrichtung lediglich eine Fahrplan-Änderungsgröße zur Einrichtung übertragen werden muß. Läßt sich streckenseitig - beispielsweise im Falle eines Staus - feststellen, daß sich der Fahrplan um insgesamt ca. $\Delta t = +10$ Minuten verschieben wird, so wird beispielsweise mit einer streckenseitigen Einrichtung zum Schienenfahrzeug bzw. zur erfindungsgemäßen Einrichtung lediglich eine Fahrplan-Änderungsgröße von $\Delta t = +10$ Minuten übertragen, und es wird in der Einrichtung bzw. in der Recheneinheit unter Heranziehung des vorgegebenen fest abgespeicherten Fahrplans und der Fahrplan-Änderungsgröße von $\Delta t = +10$ Minuten ein modifizierter Fahrplan gebildet. Die verbleibende Fahrzeit sowie der Abschältzeitpunkt für den Antrieb wird dann in der Recheneinheit unter Berücksichtigung dieses modifizierten Fahrplans gebildet.

Darüber hinaus wird die Fahrplan-Änderungsgröße vorzeichenrichtig zu der jeweiligen Zeitvorgabe des abgespeicherten Fahrplans addiert; dadurch wird sichergestellt, daß sowohl Fahrplanänderungen, die eine Verlängerung der Fahrzeit bewirken, als auch Fahrplanänderungen, die eine Reduzierung der Fahrzeit hervorrufen, Berücksichtigung finden können; dieser letzte Fall ist beispielsweise von Bedeutung, wenn das Schienenfahrzeug entgegen den Festlegungen im abgespeicherten Fahrplan den jeweils nächsten Haltepunkt früher erreichen soll als ursprünglich vorgesehen, damit die Strecke früher als geplant geräumt wird.

Um insgesamt kurze Fahrzeiten des Schienenfahrzeugs zu erreichen, muß im allgemeinen vermieden werden, daß das Schienenfahrzeug ausschließlich durch Ausrollen am Haltepunkt zum Stillstand kommt, weil nämlich das Ausrollen bei sehr geringen Geschwindigkeiten u. U viel Zeit kosten kann. Aus diesem Grunde wird in der Regel das Schienenfahrzeug bei Erreichen einer Minimalgeschwindigkeit gemäß einem vorgegebenen Bremsverlauf abgebremst. Um diesem Umstand Rechnung zu tragen, ist gemäß einer Weiterbildung der erfindungsgemäßen Einrichtung vorgesehen, daß die Recheneinheit derart ausgestaltet ist, daß sie den Abschaltzeitpunkt unter zusätzlicher Berücksichtigung eines vorgegebenen Bremsverlaufs und einer vorgegebenen Minimalgeschwindigkeit ermittelt, bei deren Unterschreiten das Schienenfahrzeug in der Phase des antriebslosen Zufahrens auf den nächsten Haltepunkt gemäß dem vorgegebenen Bremsverlauf abgebremst wird.

Zur Erläuterung der Erfindung zeigt eine Figur ein Ausführungsbeispiel für eine erfindungsgemäße Einrichtung.

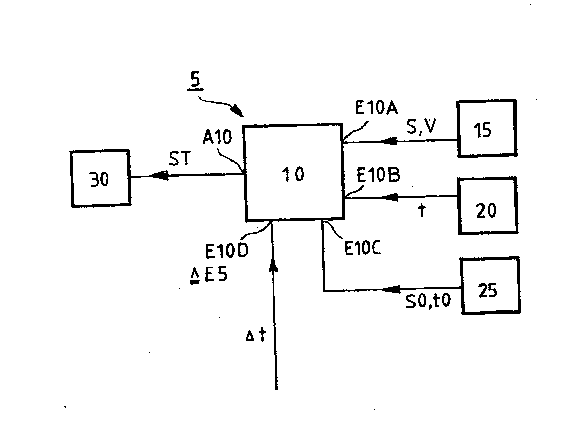

Die Figur zeigt eine Einrichtung 5 für ein nicht dargestelltes Schienenfahrzeug mit einer Recheneinheit 10, die mit ihrem einen Eingang E10A an eine Meßeinrichtung 15 angeschlossen ist. Bei der Meßeinrichtung 15 kann es sich beispielsweise um ein sog. Odometer handeln, das unter Heranziehung der Radumdrehungen des Schienenfahrzeugs die jeweilige Geschwindigkeit des Schienenfahrzeugs und die jeweils bereits zurückgelegte Wegstrecke und damit den jeweiligen Ort S des Schienenfahrzeugs bestimmt. An einem weiteren Eingang E10B der Recheneinheit 10 ist der Recheneinheit 10 ein Zeitgeber in Form einer Uhr 20 vorgeordnet, die die jeweilige Uhrzeit t als Zeitmeßwert zur Recheneinheit 10 überträgt.

Ein zusätzlicher Eingang E10C der Recheneinheit 10 ist mit einem Speicher 25 verbunden, in dem Wegstreckendaten und ein für das Schienenfahrzeug verbindlicher Fahrplan fest abgespeichert sind. Darüber hinaus sind im Speicher 25 Ausrolldaten AD abgespeichert, die das Ausrollverhalten des Schienenfahrzeugs bei abgeschaltetem Antrieb beschreiben; bei diesen Ausrolldaten AD kann es sich beispielsweise um Verzögerungswerte handeln, die beim Ausrollen des Schienenfahrzeugs, also bei abgeschaltetem Antrieb, vorab gemessen worden sind.

Die Recheneinheit 10 weist darüber hinaus einen ergänzenden Eingang E10D auf, an dem eine Fahrplan-Änderungsgröße $\Delta t$ in Form eines Zeitversatzwertes an die Recheneinheit angelegt werden kann. Der ergänzende Eingang E10D der Recheneinheit 10 bildet zugleich einen Dateneingang E5 der Einrichtung 5.

Der Recheneinheit 10 ist an einem Ausgang A10 eine Ausgabeeinrichtung 30 nachgeordnet.

Die Einrichtung 5 wird wie folgt betrieben:

Mit der Recheneinheit 10 werden zunächst die Meßeinrichtung 15 sowie die Uhr 20 abgefragt; dabei wird ein den jeweiligen Ort des Schienenfahrzeugs angebender Ortsmeßwert S, ein die jeweilige Geschwindigkeit des Schienenfahrzeugs angebende Geschwindigkeitsmeßgröße V sowie ein die jeweilige Uhrzeit angebender Zeitmeßwert t zu der Recheneinheit 10 übertragen.

Die Recheneinheit 10 liest anschließend aus dem Speicher 25 als Wegstreckenangabe bzw. Wegstreckendaten den Ort S0 des jeweils nächsten Haltepunkts und eine Sollankunftszeit t0 aus; die Sollankunftszeit t0 gibt dabei die Uhrzeit an, zu der das Schienenfahrzeug den jeweils nächsten Haltepunkt erreicht haben soll. Außerdem fragt die Recheneinheit 10 die im Speicher 25 abgespeicherten Ausrolldaten AD ab.

Die Recheneinheit 10 prüft anschließend, ob an ihrem ergänzenden Eingang E10D eine Fahrplan-Änderungsgröße Δt anliegt. Das Anlegen einer Fahrplan-Änderungsgröße Δt am ergänzenden Eingang E10D kann auf unterschiedliche Art und Weise erfolgen; so kann der ergänzenden Eingang E10D beispielsweise so ausgestaltet sein, daß eine Fahrplan-Änderungsgröße Δt elektrisch durch eine Tastatureingabe des Fahrzeugführers erfolgen kann. Eine andere Art der Eingabe der Fahrplan-Änderungsgröße Δt könnte darin bestehen, daß die Fahrplan-Änderungsgröße Δt per Funk - beispielsweise durch eine streckenseitige Einrichtung - in die Recheneinheit 10 eingespeist wird; dies würde dann selbstverständlich entsprechende Empfangsantennen am ergänzenden Eingang E10D der Recheneinheit erforderlich machen.

Im weiteren wird nun beispielhaft davon ausgegangen, daß eine Fahrplan-Änderungsgröße Δt = + 10 Minuten am ergänzenden Eingang E10D der Recheneinheit 10 anliegt. Die Recheneinheit 10 bildet daraufhin einen modifizierten Fahrplan, indem sie zu jeder einzelnen im Speicher 25 abgespeicherten Fahrplanvorgabe die Fahrplan-Änderungsgröße Δt = + 10 Minuten addiert; diese Addition soll nun am Beispiel der Sollankunftszeit t0 erläutert werden, mit der eine modifizierte Sollankunftszeit t0' gebildet wird gemäß:

$$t0' = t0 + \Delta t$$

Anschließend wird mit dieser modifizierten Sollankunftszeit t0', dem Ortsmeßwert S, dem Ort S0 des nächsten Haltepunkts, der Geschwindigkeit V und den Ausrolldaten AD des Schienenfahrzeugs ein Abschaltzeitpunkt bestimmt, ab dem das Schienenfahrzeug bei abgeschaltetem Antrieb den nächsten Haltepunkt unter Ausnutzung seiner kinetischen Energie und unter Einhaltung des modifizierten Fahrplans erreicht.

Um insgesamt kurze Fahrzeiten des Schienenfahrzeugs zu erreichen, muß im allgemeinen vermieden werden, daß das Schienenfahrzeug ausschließlich durch Ausrollen am Haltepunkt zum Stillstand kommt, weil nämlich das Ausrollen bei sehr geringen Geschwindigkeiten u. U viel Zeit kosten kann. Aus diesem Grunde wird in der Regel das Schienenfahrzeug nach dem Unterschreiten einer vorgegebenen Minimalgeschwindigkeit gemäß einem vorgegebenen Bremsverlauf abgebremst. Um diesem Umstand Rechnung zu tragen, kann darüber hinaus vorgesehen werden, daß der Abschaltzeitpunkt in der Recheneinheit 10 unter zusätzlicher Berücksichtigung des vorgegebenen Bremsverlaufs und der vorgegebenen Minimalgeschwindigkeit ermittelt wird.

Wie unter Heranziehung dieser Eingabeparameter - also der Sollankunftszeit t0', dem Ortsmeßwert S, dem Ort S0 des nächsten Haltepunkts, der Geschwindigkeit V und den Ausrolldaten AD sowie ggf. einer eventuell vorgegebenen Minimalgeschwindigkeit und einem eventuell vorgegebenen Bremsverlauf - der Abschaltzeitpunkt bestimmt werden kann, läßt sich der eingangs erwähnten US-Patentschrift 5,239,472 im Detail entnehmen.

Nachdem der Abschaltzeitpunkt bestimmt worden ist, bildet die Recheneinrichtung 10 ein Ansteuersignal ST für die Ausgabeeinrichtung 30; die Ausgabeeinrichtung 30 erzeugt daraufhin ein Abschaltsignal, das den Abschaltzeitpunkt angibt. Bei diesem Abschaltsignal kann es sich beispielsweise wie bei der eingangs erläuterten vorbekannten Einrichtung um eine optische Anzeige handeln, die durch Anzeige des Begriffs "coast" signalisiert, daß mit dem Ausrollen begonnen werden kann; statt dessen kann es sich auch um eine Anzeige handeln, die optisch und/oder akustisch den Abschaltzeitpunkt in Form einer Zeitangabe anzeigt bzw. angibt.

**Patentansprüche**

1. Einrichtung (5) eines Schienenfahrzeugs mit

   - einer Recheneinheit (10), die im Schienenfahrzeug

      - unter Heranziehung eines gemessenen, den Ort des Schienenfahrzeugs angebenden Ortsmeßwertes (S) und vorgegebener, abgespeicherter Wegstreckendaten den Abstand des Schienenfahrzeugs zum jeweils vorgesehenen nächsten Haltepunkt ermittelt,

      - unter Heranziehung eines gemessenen, die jeweilige Zeit angebenden Zeitmeßwertes (t) und eines vorgegebenen, abgespeicherten Fahrplans die verbleibende Fahrzeit zum nächsten Haltepunkt ermittelt und

      - unter Berücksichtigung des ermittelten Abstands, der ermittelten verbleibenden Fahrzeit, eines die Geschwindigkeit des Schienenfahrzeugs angebenden Geschwindigkeitsmeßwertes (V) und vorgegebener, das Ausrollverhalten des Schienenfahrzeugs bei abgeschaltetem Antrieb beschreibender Ausrolldaten (AD) einen Abschaltzeitpunkt im Schienenfahrzeug ermittelt, ab dem das Schienenfahrzeug unter Einhaltung des Fahrplans den jeweils fahrplanseitig vorgesehenen nächsten Haltepunkt antriebslos rechtzeitig erreicht, und

-   einer mit der Recheneinheit (10) verbundenen und von dieser angesteuerten Ausgabeeinrichtung (30), die ein den Abschaltzeitpunkt angebendes Abschaltsignal erzeugt,

**dadurch gekennzeichnet, daß**

-   die Einrichtung (5) einen Dateneingang (E5) aufweist, an dem eine Fahrplan-Änderungsgröße ($\Delta t$) in die Einrichtung (5) eingebbar ist, und
-   die Recheneinheit (10) derart ausgestaltet ist, daß sie - falls eine Fahrplan-Änderungsgröße ($\Delta t$) eingegeben ist - mit dem vorgegebenen, abgespeicherten Fahrplan und der eingegebenen Fahrplan-Änderungsgröße ($\Delta t$) einen modifizierten Fahrplan bildet und unter Berücksichtigung dieses modifizierten Fahrplans anstelle des abgespeicherten Fahrplans die verbleibende Fahrzeit sowie den Abschaltzeitpunkt ermittelt,
-   wobei die Recheneinheit (10) derart ausgestaltet ist, daß sie den modifizierten Fahrplan bildet, indem sie zu jeder Zeitvorgabe des abgespeicherten Fahrplans die Fahrplan-Änderungsgröße ($\Delta t$) addiert.

2.  Einrichtung nach Anspruch 1,
    **dadurch gekennzeichnet, daß**
    die Recheneinheit (10) derart ausgestaltet ist, daß sie den Abschaltzeitpunkt unter zusätzlicher Berücksichtigung eines vorgegebenen Bremsverlaufs und einer vorgegebenen Minimalgeschwindigkeit ermittelt, bei deren Unterschreiten das Schienenfahrzeug in der Phase des antriebslosen Zufahrens auf den nächsten Haltepunkt gemäß dem vorgegebenen Bremsverlauf abgebremst wird.

iour of the rail vehicle when the drive is disconnected, to ascertain a disconnection instant in the rail vehicle after which the rail vehicle, observing the timetable, reaches the next particular stopping point envisaged by the timetable on time without any drive, and

-   an output device (30) which is connected to and controlled by the computing unit (10) and produces a disconnection signal indicating the disconnection instant, **characterized in that**
-   the device (5) has a data input (E5) at which a timetable change variable ($\Delta t$) can be entered into the device (5), and
-   the computing unit (10) is designed such that - if a timetable change variable $\Delta t$ is entered - it
-   uses the prescribed stored timetable and the entered timetable change variable ($\Delta t$) to create a modified timetable, and
-   ascertains the remaining journey time and the disconnection instant by taking into account this modified timetable instead of the stored timetable,
-   the computing unit (10) being designed such that it creates the modified timetable by adding the timetable change variable ($\Delta t$), to each scheduled time on the stored timetable.

2.  Device according to Claim 1,
    **characterized in that**
    the computing unit (10) is designed such that it ascertains the disconnection instant by additionally taking into account a prescribed braking response and a prescribed minimum speed, and, when the speed of the rail vehicle drops below this minimum speed, the rail vehicle is braked in accordance with the prescribed braking response in the phase of approaching the next stopping point without any drive.

## Claims

1.  Device (5) of a rail vehicle having

    -   a computing unit (10) which, in the rail vehicle,
    -   uses a measured location value (S), indicating the location of the rail vehicle, and prescribed stored distance data to ascertain the distance of the rail vehicle from the next particular stopping point envisaged,
    -   uses a measured time value (t), indicating the current time, and a prescribed stored timetable to ascertain the remaining journey time to the next stopping point, and
    -   takes into account the ascertained distance, the ascertained remaining journey time, a measured speed value (V), indicating the speed of the rail vehicle, and prescribed coasting data (AD), describing the coasting behav-

## Revendications

1.  Equipement (5) d'un véhicule ferroviaire comportant

    -   une unité de calcul (10) qui détermine dans le véhicule ferroviaire

        -   en exploitant une valeur mesurée de localisation (S) indiquant le lieu où se trouve le véhicule ferroviaire ainsi que des données de trajet prédéterminées et mémorisées, la distance du véhicule ferroviaire au prochain point d'arrêt respectivement prévu,
        -   en exploitant une valeur mesurée de temps (t) indiquant le temps respectif ainsi qu'un horaire prédéterminé et mémorisé, le temps de trajet restant jusqu'au prochain point d'arrêt, et

-   en tenant compte de la distance déterminée, du temps de trajet restant déterminé, d'une valeur mesurée de vitesse (V) indiquant la vitesse du véhicule ferroviaire ainsi que des données de marche sur erre (AD) décrivant la marche sur son erre du véhicule ferroviaire avec entraînement coupé, un instant de coupure dans le véhicule ferroviaire, instant à partir duquel le véhicule ferroviaire en respectant l'horaire atteint à temps mais sans entraînement le prochain point d'arrêt prévu respectivement par l'horaire, et

-   un dispositif de sortie (30) qui est relié à l'unité de calcul (10) et commandé par celle-ci et qui produit un signal de coupure indiquant l'instant de coupure,

    **caractérisé par le fait que**

-   l'équipement (5) comporte une entrée de données (E5) à laquelle une grandeur de changement d'horaire ($\Delta t$) peut être entrée dans l'équipement (5), et
-   l'unité de calcul (10) est conçue de telle sorte que, si une grandeur de changement d'horaire ($\Delta t$) est entrée, elle forme un horaire modifié avec l'horaire prédéterminé et mémorisé et avec la grandeur de changement d'horaire ($\Delta t$) entrée et elle détermine le temps de trajet restant ainsi que l'instant de coupure en tenant compte de cet horaire modifié à la place de l'horaire mémorisé,
-   l'unité de calcul (10) étant conçue de telle sorte qu'elle forme l'horaire modifié en additionnant à chaque temps prescrit de l'horaire mémorisé la grandeur de changement d'horaire $\Delta t$).

2.  Equipement selon la revendication 1,
    **caractérisé par le fait que** l'unité de calcul (10) est conçue de telle sorte
    qu'elle détermine l'instant de coupure en tenant aussi compte d'une courbe de freinage prédéterminée et d'une vitesse minimale prédéterminée telle que, si la vitesse devient inférieure à celle-ci, le véhicule ferroviaire dans la phase de son avancée sans entraînement vers le prochain point d'arrêt est freiné selon la courbe de freinage prédéterminée.